# EUROPÄISCHE PATENTSCHRIFT

(11) **EP 4 074 948 B1**
(45) Veröffentlichungstag und Bekanntmachung des Hinweises auf die Patenterteilung: **08.11.2023**
(21) Anmeldenummer: 22163125.2
(22) Anmeldetag: 21.03.2022
(51) Int. Cl.: F01N 3/20, F02B 29/04, F01N 13/00, F01P 3/02, F01P 3/12, F01N 3/035

(54) **KÜHLSYSTEM FÜR EIN REDUKTIONSMITTELDOSIERSYSTEM SOWIE VERBRENNUNGSMOTOR MIT EINEM SOLCHEN KÜHLSYSTEM**
COOLING SYSTEM FOR A REDUCING AGENT METERING SYSTEM AND COMBUSTION ENGINE WITH SUCH A COOLING SYSTEM
SYSTÈME DE REFROIDISSEMENT POUR UN SYSTÈME DE DOSAGE D'AGENT RÉDUCTEUR, AINSI QUE MOTEUR À COMBUSTION INTERNE DOTÉ D'UN TEL SYSTÈME DE REFROIDISSEMENT

(30) Priorität: 24.03.2021 DE 102021107434
(43) Veröffentlichungstag der Anmeldung: 19.10.2022
(73) Patentinhaber: VOLKSWAGEN AG, 38440 Wolfsburg (DE)
(72) Erfinder: Kiel, Marco, 39116 Magdeburg (DE); Lucke, Stefan, 38446 Wolfsburg (DE)
(74) Vertreter: Gulde & Partner

(56) Entgegenhaltungen:
- DE-A1-102014 003 580
- DE-A1-102017 218 392

## Beschreibung

Die Erfindung betrifft ein Kühlsystem für ein Reduktionsmitteldosiersystem zur Abgasnachbehandlung eines Verbrennungsmotors sowie einen Verbrennungsmotor mit einem solchen Kühlsystem.

Die aktuelle und eine zukünftig immer schärfer werdende Abgasgesetzgebung stellt hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen StickoxidEmissionen eine Herausforderung für die Motorenentwickler dar. Bei Ottomotoren erfolgt die Abgasreinigung in bekannter Weise über einen Drei-Wege-Katalysator sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder einen NOx-Speicherkatalysator, einen Katalysator zur selektiven katalytischen Reduktion von Stickoxiden (SCR-Katalysator), sowie einen Partikelfilter zur Abscheidung von Rußpartikeln und ggf. weitere Katalysatoren aufweisen. Um die hohen Anforderungen an minimale Stickoxidemissionen zu erfüllen, sind Abgasnachbehandlungssysteme bekannt, welche zwei in Reihe geschaltete SCR-Katalysatoren aufweisen, wobei jedem der SCR-Katalysatoren ein Dosierelement zur Eindosierung eines Reduktionsmittels vorgeschaltet ist. Als Reduktionsmittel wird dabei bevorzugt eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sich im Allgemeinen aus 32,5 % Harnstoff und 67,5 % Wasser zusammen.

Problematisch bei Harnstoff-Dosier-Systemen zur selektiven katalytischen Reduktion von Stickoxiden ist das Alterungsverhalten der Harnstofflösung, welches mit steigenden Temperaturen zunimmt. Ab einer Temperatur von etwa 110°C droht eine thermische Zersetzung der Harnstofflösung, welche die Wirksamkeit der Abgasnachbehandlung deutlich verringert. Zudem können Temperaturen von mehr als 110°C zu einem Sieden der Harnstofflösung führen, wodurch die Einspritzventile des Dosiersystems geschädigt werden können.

Die DE 10 2014 003 580 A1 offenbart ein Kühlsystem zur Kühlung von Dosierventilen eines Reduktionsmitteldosiersystems zur Eindosierung eines Reduktionsmittels in eine Abgasanlage eines Verbrennungsmotors, wobei das Kühlsystem einen ersten Kühlmittelkreislauf umfasst, welcher einen Motorblock des Verbrennungsmotors mit Kühlmittel versorgt, sowie mit einem zweiten Kühlmittelkreislauf, welcher einen Ladeluftkühler des Verbrennungsmotors sowie mindestens ein Dosierventil mit Kühlmittel versorgt, wobei der zweite Kühlmittelkreislauf eine Kühlmittelpumpe umfasst.

Aus der DE 10 2018 003 528 A1 ist eine Abgasreinigungsanlage für einen Verbrennungsmotor bekannt, welche einen ersten SCR-Katalysator und wenigstens einen stromab des ersten SCR-Katalysators angeordneten zweiten SCR-Katalysator sowie einen Tank zum Aufnehmen eines Reduktionsmittels umfasst. Die Abgasreinigungsanlage umfasst einen ersten Injektor, mittels welchem das Reduktionsmittel an wenigstens einer stromauf des ersten SCR-Katalysators angeordneten ersten Stelle in das Abgas einbringbar ist und einen zweiten Injektor, mittels welchem das Reduktionsmittel an wenigstens einer stromauf des zweiten SCR-Katalysators und stromab des ersten SCR-Katalysators angeordneten zweiten Stelle in das Abgas einbringbar ist. Die Abgasreinigungsanlage umfasst ferner eine von dem Reduktionsmittel aus dem Tank durchströmbaren Hauptleitung, eine von der Hauptleitung abzweigende Teilleitung sowie eine Pumpe, wobei der Teilleitung ein Absperrventil zugeordnet ist, mittels welchem zumindest ein überwiegender Teil der Teilleitung von der Hauptleitung fluidisch abtrennbar ist.

Die DE 10 2012 011 991 A1 offenbart ein Verfahren zum Betreiben eines Verbrennungsmotors. Der Verbrennungsmotor umfasst einen Ladeluftkühler zum Kühlen von Ladeluft und ein Dosierventil. Die Ladeluft wird mit einem Abgasstrom vermischt, welcher über eine einstellbare Abgasrückführungsrate von einem Abgastrakt des Verbrennungsmotors zu dem Ladeluftkühler geleitet wird. Bei dem Verfahren wird eine Dosierventiltemperatur des Dosierventils bestimmt und eine Ladelufttemperatur der Ladeluft erfasst. Abhängig von der Dosierventiltemperatur wird Kühlmittel zu dem Dosierventil und dem Ladeluftkühler mittels einer gemeinsamen einstellbaren Kühlmittelpumpe zugeführt. Ferner wird eine Abgasrückführungsrate in Abhängigkeit von der Ladelufttemperatur und der Dosierventiltemperatur eingestellt.

Der Erfindung liegt nun die Aufgabe zugrunde, die Kühlung der Dosierventile zur Eindosierung eines Reduktionsmittels zur selektiven, katalytischen Reduktion von Stickoxiden zu verbessern und die aus dem Stand der Technik bekannten Nachteile zu überwinden.

Diese Aufgabe wird durch ein Kühlsystem zur Kühlung von Dosierventilen eines Reduktionsmitteldosiersystems zur Eindosierung eines Reduktionsmittels in eine Abgasanlage eines Verbrennungsmotors gelöst. Das Kühlsystem umfasst einen ersten Kühlmittelkreislauf, welcher einen Motorblock des Verbrennungsmotors mit Kühlmittel versorgt, sowie einen zweiten Kühlmittelkreislauf, welcher einen Ladeluftkühler des Verbrennungsmotors mit Kühlmittel versorgt. Dabei umfasst der erste Kühlmittelkreislauf eine erste Kühlmittelpumpe und der zweite Kühlmittelkreislauf eine zweite Kühlmittelpumpe. Erfindungsgemäß ist vorgesehen, dass ein in Strömungsrichtung eines Abgasstroms eines Verbrennungsmotors durch eine Abgasanlage des Verbrennungsmotors motornahes erstes Dosierventil mit dem zweiten Kühlmittelkreislauf verbunden ist und ein motorfernes zweites Dosierventil mit dem ersten Kühlmittelkreislauf verbunden ist.

Ein erfindungsgemäßes Kühlsystem ermöglicht eine besonders effiziente Kühlung der Dosierventile des Reduktionsmitteldosiersystems. Insbesondere wird das thermisch höher belastete motornahe erste Dosierventil durch die Einbindung in den zweiten Kühlmittelkreislauf stärker gekühlt als des motorferne zweite Dosierventil. Dadurch kann betriebssicher verhindert werden, dass es durch eine Überhitzung der Dosierventile zu einer thermischen Zersetzung des Reduktionsmittels oder einem Sieden des Reduktionsmittels kommt, welches die Eindosierung durch Dampfblasenbildung gefährdet und zu einem Ausfall des entsprechenden Dosierventils führen kann.

Durch die in den abhängigen Ansprüchen aufgeführten Merkmale sind vorteilhafte Verbesserungen und Weiterentwicklungen des im unabhängigen Anspruch angegebenen Kühlsystems möglich.

In bevorzugter Ausgestaltung der Erfindung ist vorgesehen, dass in dem zweiten Kühlmittelkreislauf der Ladeluftkühler und das erste Dosierventil in einer Parallelschaltung zueinander angeordnet sind. Durch eine Parallelschaltung können sowohl der Ladeluftkühler als auch das erste Dosierventil mit vergleichsweise kaltem Kühlmittel durchströmt werden, wodurch eine optimale Kühlung der beiden Komponenten gewährleistet ist. Somit wird vermieden, dass eine der Komponenten durch ein bereits durch eine andere Komponente aufgeheiztes Kühlmittel durchströmt wird und somit die Kühlleistung herabgesetzt ist. Zudem ist eine Parallelschaltung vorteilhaft, weil die Strömungsverluste beim Durchströmen des ersten Dosierventils zu einem starken Druckabfall im zweiten Kühlmittelkreislauf führen, dieser Druckabfall jedoch geringer als bei einer Reihenschaltung ausfällt. Somit führt die Parallelschaltung zu moderaten Drücken und einer entsprechend geringen benötigten Förderleistung der zweiten Kühlmittelpumpe. Eine Reihenschaltung ist ungünstig, da die Druckverluste beim Durchströmen des motornahen ersten Dosierventils höher sind als bei den anderen zu kühlenden Komponenten im zweiten Kühlmittelkreislauf.

Bevorzugt ist dabei, wenn mindestens eine weitere zu kühlende Komponente des Verbrennungsmotors in einer weiteren Parallelschaltung zu dem Ladeluftkühler und dem ersten Dosierventil angeordnet ist. Auf diese Art und Weise können Reihenschaltungen von drei oder mehr zu kühlenden Komponenten vermieden werden, bei denen insbesondere die letzte der in Reihe geschalteten Komponenten nur noch unzureichend gekühlt wird.

Besonders bevorzugt ist dabei, wenn die mindestens eine weitere zu kühlende Komponente ein Abgasturbolader und/oder ein Motorsteuergerät ist.

In weiterer bevorzugter Ausgestaltung der Erfindung ist vorgesehen, dass der erste Kühlmittelkreislauf und der zweite Kühlmittelkreislauf über eine Verbindungsleitung miteinander verbunden sind. Dadurch ist auf einfache Art und Weise ein Druckausgleich zwischen den beiden Kühlmittelkreisläufen möglich. Zudem kann sichergestellt werden, dass in keinem der Kühlmittelkreisläufe Luft angesaugt wird, welche die Kühlleistung und die Förderleistung der Kühlmittelpumpen herabsetzt.

Besonders bevorzugt ist dabei, wenn der erste Kühlmittelkreislauf über eine erste Rücklaufleitung und der zweite Kühlmittelkreislauf über eine zweite Rücklaufleitung mit einem gemeinsamen Ausgleichsbehälter verbunden sind. Dadurch kann bei einem Überdruck in einem der Kühlmittelkreisläufe ein einfaches Rückströmen des Kühlmittels in den Ausgleichsbehältern gewährleistet werden. Besonders vorteilhaft ist dabei, wenn in den jeweiligen Rücklaufleitungen jeweils ein Rückschlagventil angeordnet ist, welches ein Rückströmen von Kühlmittel aus dem Ausgleichsbehälter in den jeweiligen Kühlmittelkreislauf unterbindet.

In einer vorteilhaften Ausgestaltung des Kühlsystem ist vorgesehen, dass die erste Kühlmittelpumpe und/oder die zweite Kühlmittelpumpe, vorzugsweise beide Kühlmittelpumpen, als elektrisch angetriebene Kühlmittelpumpen ausgeführt sind. Durch eine elektrisch angetriebene Kühlmittelpumpe ist eine besonders einfache und kostengünstige Förderung eines Kühlmittelstroms in dem jeweiligen Kühlmittelkreislauf möglich.

Besonders bevorzugt ist dabei, wenn ein Fördervolumen der elektrisch angetriebenen Kühlmittelpumpen regelbar, vorzugsweise stufenlos regelbar ist. Dadurch kann der in dem jeweiligen Kühlmittelkreislauf zirkulierende Kühlmittelstrom bedarfsgerecht an die Betriebssituation angepasst werden, sodass auf einen unnötig hohen Kühlmittelstrom und eine damit verbundene erhöhte Verlustleistung verzichtet werden kann.

Ein weiterer Teilaspekt der Erfindung betrifft einen Verbrennungsmotor mit einem Motorblock, wobei in dem Motorblock mindestens ein Brennraum ausgebildet ist, wobei ein Einlass des Verbrennungsmotors mit einem Ansaugtrakt und ein Auslass des Verbrennungsmotors mit einer Abgasanlage verbunden ist. In der Abgasanlage sind in Strömungsrichtung eines Abgasstroms des Verbrennungsmotors durch die Abgasanlage ein motornaher ersten Katalysator zur selektiven, katalytischen Reduktion von Stickoxiden und stromabwärts des motornahen ersten Katalysators ein zweiter Katalysator zur selektiven, katalytischen Reduktion von Stickoxiden angeordnet. Der Verbrennungsmotor umfasst ein Reduktionsmitteldosiersystem mit mindestens zwei Dosierventilen, wobei das erste Dosierventil stromaufwärts des motornahen ersten Katalysators zur selektiven, katalytischen Reduktion von Stickoxiden und das zweite Dosierventil stromabwärts des motornahen ersten Katalysators zur selektiven, katalytischen Reduktion von Stickoxiden und stromaufwärts des zweiten Katalysators zur selektiven, katalytischen Reduktion von Stickoxiden angeordnet ist. Der Verbrennungsmotor weist das erfindungsgemäße Kühlsystem auf, welches dazu eingerichtet ist, die Dosierventile zu kühlen. Bei einem solchen Verbrennungsmotor kann durch die effiziente Kühlung der Dosierventile die Effizienz der Abgasnachbehandlung verbessert werden. Zudem kann verhindert werden, dass ein Dosierventil durch eine thermische Überlastung geschädigt wird.

Besonders bevorzugt ist dabei, wenn der erste Katalysator als motornaher Partikelfilter mit einer Beschichtung zur selektiven, katalytischen Reduktion von Stickoxiden und der zweite Katalysator als motorferner SCR-Katalysator ausgebildet sind. Unter einer motornahen Position ist in diesem Zusammenhang eine Position des Partikelfilters mit einem Abstand seines stirnseitigen Einlasses von weniger als 80cm, vorzugsweise von weniger als 50cm, von einem Auslass des Verbrennungsmotors zu verstehen. Dabei ist der Partikelfilter vorzugsweise im Motorraum eines Kraftfahrzeugs und der zweite SCR-Katalysator in einer Unterbodenlage eines Kraftfahrzeugs angeordnet.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit denselben Bezugsziffern gekennzeichnet. Es zeigen:
- Figur 1: einen Verbrennungsmotor mit einem Abgasnachbehandlungssystem, wobei die Dosierventile des Abgasnachbehandlungssystems durch ein erfindungsgemäßes Kühlsystem gekühlt werden, und
- Figur 2: ein Ausführungsbeispiel eines Kühlsystems für einen Verbrennungsmotor mit einem Reduktionsmitteldosiersystem zur Abgasnachbehandlung.

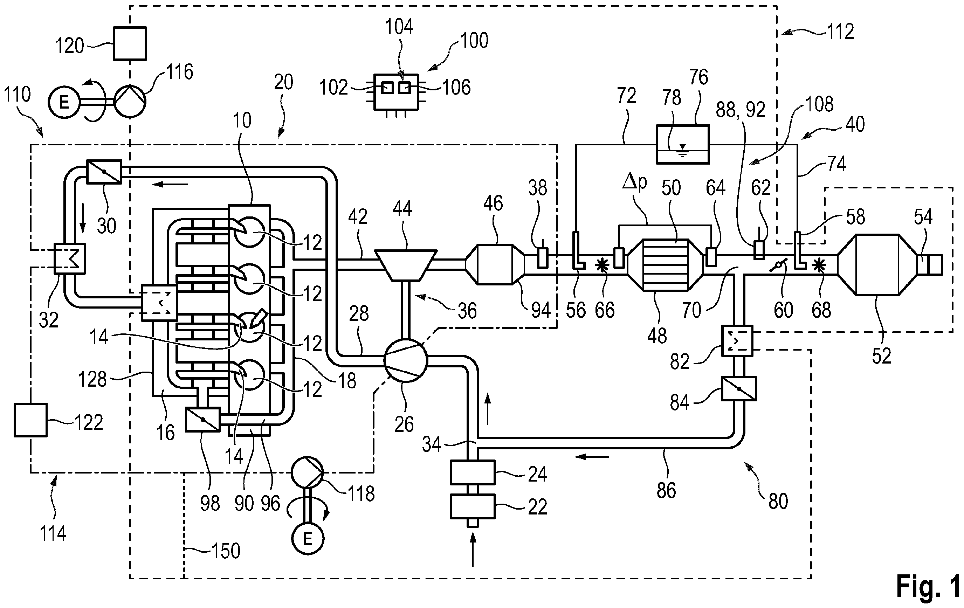

Figur 1 zeigt die schematische Darstellung eines Verbrennungsmotors 10 mit einem Ansaugtrakt 20 und einer Abgasanlage 40. Der Verbrennungsmotor 10 ist als ein direkteinspritzender Dieselmotor ausgeführt und weist mehrere Brennräume 12 auf. An den Brennräumen 12 ist jeweils ein Kraftstoffinjektor 14 zur Einspritzung eines Kraftstoffes in den jeweiligen Brennraum 12 angeordnet. Der Verbrennungsmotor 10 ist mit seinem Einlass 16 mit einem Ansaugtrakt 20 und mit seinem Auslass 18 mit einer Abgasanlage 40 verbunden. Der Verbrennungsmotor 10 umfasst ferner eine Hochdruck-Abgasrückführung 90 mit einer Abgasrückführungsleitung 96, in welcher ein Hochdruck-Abgasrückführungsventil 98 angeordnet ist, über welches ein Abgas des Verbrennungsmotors 10 von dem Auslass 18 zum Einlass 16 zurückgeführt werden kann. An den Brennräumen 12 sind Einlassventile und Auslassventile angeordnet, mit welchen eine fluidische Verbindung vom Ansaugtrakt 20 zu den Brennräumen 12 oder von den Brennräumen 12 zur Abgasanlage 40 geöffnet oder verschlossen werden kann.

Der Ansaugtrakt 20 umfasst einen Ansaugkanal 28, in welchem in Strömungsrichtung von Frischluft durch den Ansaugkanal 28 ein Luftfilter 22, stromabwärts des Luftfilters 22 ein Luftmassenmesser 24, insbesondere ein Heißfilmluftmassenmesser, stromabwärts des Luftmassenmessers 24 ein Verdichter 26 eines Abgasturboladers 36, stromabwärts des Verdichters 26 eine Drosselklappe 30 und weiter stromabwärts ein Ladeluftkühler 32 angeordnet sind. Dabei kann der Luftmassenmesser 24 auch in einem Filtergehäuse des Luftfilters 22 angeordnet sein, sodass der Luftfilter 22 und der Luftmassenmesser 24 eine Baugruppe ausbildet. Stromabwärts des Luftfilters 22 und stromaufwärts des Verdichters 26 ist eine Einmündung 34 vorgesehen, an welcher eine Abgasrückführungsleitung 86 einer Niederdruck-Abgasrückführung 80 in den Ansaugkanal 28 mündet.

Die Abgasanlage 40 umfasst einen Abgaskanal 42, in welchem in Strömungsrichtung eines Abgases des Verbrennungsmotors 10 durch den ersten Abgaskanal 42 eine Turbine 44 des Abgasturboladers 36 angeordnet ist, welche den Verdichter 26 im Luftversorgungssystem 20 über eine Welle antreibt. Der Abgasturbolader 36 ist vorzugsweise als Abgasturbolader 36 mit variabler Turbinengeometrie ausgeführt. Dazu sind einem Turbinenrad der Turbine 44 verstellbare Leitschaufeln vorgeschaltet, über welche die Anströmung des Abgases auf die Schaufeln der Turbine 44 variiert werden kann. Stromabwärts der Turbine 44 sind mehrere Abgasnachbehandlungskomponenten 46, 48, 50, 52, 54, 94 vorgesehen. Dabei ist unmittelbar stromabwärts der Turbine 44 als erste Komponente der Abgasnachbehandlung ein Oxidationskatalysator 46 oder ein NOx-Speicherkatalysator 94 angeordnet. Stromabwärts des Oxidationskatalysators 46 oder des NOx-Speicherkatalysators 94 ist ein motornaher erster SCR-Katalysator 48, vorzugsweise ein Partikelfilter 50 mit einer Beschichtung zur selektiven katalytischen Reduktion von Stickoxiden (SCR-Beschichtung) angeordnet. Stromabwärts des motornahen ersten SCR-Katalysators 48 ist vorzugsweise in Unterbodenlage eines Kraftfahrzeuges ein zweiter SCR-Katalysator 52 im Abgaskanal 42 angeordnet. Der zweite SCR-Katalysator 52 weist einen Ammoniak-Sperrkatalysator 54 auf. Der Abgasanlage 40 ist ein Reduktionsmitteldosiersystem 108 mit zwei oder mehr Dosierventilen 56, 58 zugeordnet. Stromabwärts des Oxidationskatalysators 46 oder des NOx-Speicherkatalysators 94 und stromaufwärts des ersten SCR-Katalysators 48 ist ein erstes Dosierventil 56 zur Eindosierung eines Reduktionsmittels 78 in den Abgaskanal 42 vorgesehen. Stromabwärts des ersten SCR-Katalysators 48, insbesondere stromabwärts des Partikelfilters 50 mit der SCR-Beschichtung, zweigt an einer Verzweigung 70 eine Abgasrückführungsleitung 86 einer Niederdruck-Abgasrückführung 80 aus dem Abgaskanal 42 ab. Stromabwärts der Verzweigung 70 und stromaufwärts des zweiten SCR-Katalysators 52 ist ein zweites Dosierventil 58 angeordnet, um das Reduktionsmittel 78 in den Abgaskanal 42 einzudosieren. Das erste Dosierventil 56 und das zweite Dosierventil 58 sind jeweils über eine Reduktionsmittelleitung 72, 74 mit einem gemeinsamen Reduktionsmittelbehälter 76 des Reduktionsmitteldosiersystems 108 verbunden, in welchem das Reduktionsmittel 78 bevorratet ist. Ferner umfasst die Abgasanlage 40 eine Abgasklappe 60, mit welcher die Abgasrückführung über die Niederdruck-Abgasrückführung 80 gesteuert werden kann.

Die Niederdruck-Abgasrückführung 80 umfasst neben der Abgasrückführungsleitung 86 einen Abgasrückführungskühler 82 und ein Abgasrückführungsventil 84, über welches die Abgasrückführung durch die Abgasrückführungsleitung 86 steuerbar ist. In dem Abgaskanal 42 kann eine Abgastemperatur T_{EG} durch einen Temperatursensor 38 erfasst werden oder durch das Motorsteuergerät 90 berechnet werden, um die Niederdruck-Abgasrückführung 80 zu aktivieren, sobald die Abgastemperatur T_{EG} einen definierten Schwellenwert überschritten hat. An der Abgasrückführungsleitung 86 der Niederdruck-Abgasrückführung 80 kann ein weiterer Temperatursensor vorgesehen werden, um die Temperatur des zurückgeführten Abgases stromabwärts des Abgasrückführungskühlers 82 zu ermitteln. Dadurch kann vermieden werden, dass das zurückgeführte Abgas so stark gekühlt wird, dass der Taupunkt unterschritten wird und es zu einem Auskondensieren von Wassertropfen in der Abgasrückführungsleitung 86 kommt. Somit kann verhindert werden, dass Wasserdampf oder im Abgas enthaltene Gaskomponenten auskondensieren und in der Niederdruck-Abgasrückführung 80 oder im Ansaugtrakt 20 zu Beschädigungen oder Ablagerungen führen. Stromabwärts der Verzweigung 70 und stromaufwärts des Abgasrückführungskühlers 82 kann ferner ein Filter vorgesehen werden, um den Eintrag von Partikeln in die Niederdruck-Abgasrückführung 80 zu minimieren. Der Abgasrückführungskanal 86 mündet an einer Einmündung 34 in die Ansaugleitung 28 des Ansaugtraktes 20.

In der Abgasanlage 40 ist stromabwärts der Verzweigung 70 für die Niederdruck-Abgasrückführung und stromaufwärts des zweiten Dosierventils 58 ein Abgassensor 62 zur Erfassung der Ammoniak-Konzentration im Abgaskanal 42 angeordnet. Der Abgassensor 62 ist vorzugsweise als NH₃-Sensor 88 oder als NH₃-NO_{X}-Kombisensor 92 ausgeführt. Ferner weist der Partikelfilter 50 einen Differenzdrucksensor 64 auf, mit welchem eine Druckdifferenz Δp über den Partikelfilter 50 ermittelt wird. Auf diese Weise kann der Beladungszustand des Partikelfilters 50 ermittelt und bei Überschreiten eines definierten Beladungsniveaus eine Regeneration des Partikelfilters 50 eingeleitet werden. Ferner ist in der Abgasanlage 40 ein Temperatursensor 38 vorgesehen, um die Abgastemperatur zu ermitteln.

Stromabwärts des ersten Dosierventils 56 und stromaufwärts des ersten SCR-Katalysators 48 kann ein erster Abgasmischer 66 vorgesehen sein, um eine Durchmischung von Abgasstrom des Verbrennungsmotors 10 und Reduktionsmittel 78 vor Eintritt in den ersten SCR-Katalysator 48 zu verbessern und die Länge der Mischstrecke zu verkürzen. Stromabwärts des zweiten Dosierventils 58 und stromaufwärts des zweiten SCR-Katalysators 52 kann ein zweiter Abgasmischer 68 angeordnet sein, um die Vermischung von Abgasstrom und Reduktionsmittel 78 zu verbessern und das Verdampfen des Reduktionsmittels 78 im Abgaskanal 42 zu unterstützen.

Der Verbrennungsmotor 10 ist mit einem Motorsteuergerät 100 verbunden, welches über nicht dargestellte Signalleitungen mit dem Abgassensor 68, 88, 92, dem Differenzdrucksensor 66, dem Temperatursensor 38 sowie mit den Kraftstoffinjektoren 14 des Verbrennungsmotors 10 und den Dosierventilen 56, 58 verbunden ist. Das Motorsteuergerät 100 weist eine Recheneinheit 102 und eine Speichereinheit 104 auf, in welcher ein maschinenlesbarer Programmcode 106 zur Durchführung eines erfindungsgemäßen Verfahrens zur Abgasnachbehandlung des Verbrennungsmotors 10 gespeichert ist.

Der Verbrennungsmotor 10 weist ein Kühlsystem 110 mit einem ersten Kühlmittelkreislauf 112 auf, welcher auch als Hochtemperaturkühlmittelkreislauf bezeichnet wird, über welches der Motorblock 128 des Verbrennungsmotors 10 sowie ein motorfernes Dosiervenitl 58 kühlbar sind. Das Kühlsystem 110 weist ferner einen zweiten Kühlmittelkreislauf 112 auf, welcher auch als Niedertemperaturkühlmittelkreislauf bezeichnet wird, über welchen ein Ladeluftkühler 32 sowie ein motornahes Dosierventil 56 des Reduktionsmitteldosiersystems 108 kühlbar sind. Der Kühlmittelfluss durch das Kühlsystem 110 ist durch das Motorsteuergerät 100 steuerbar.

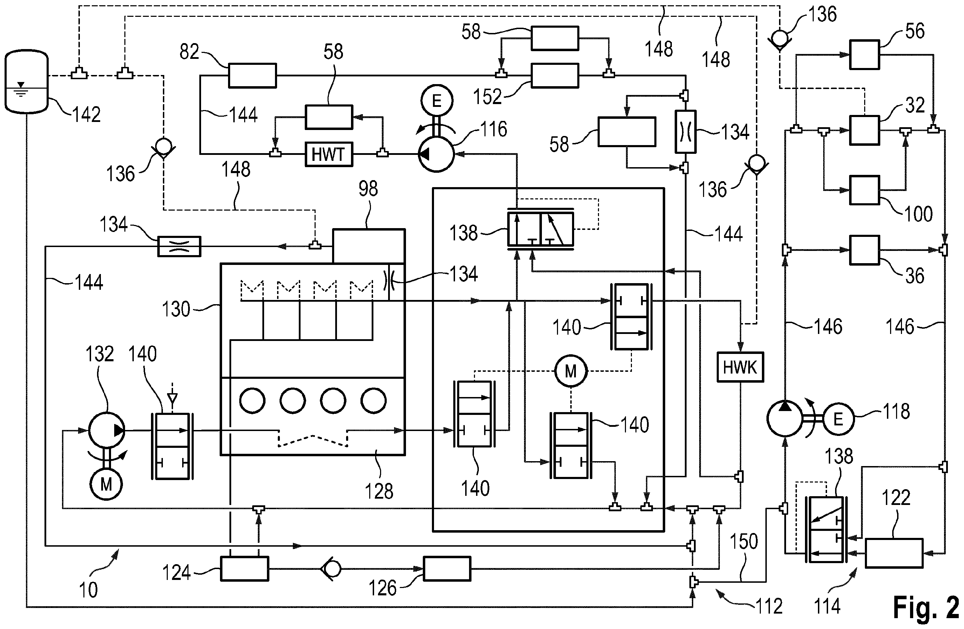

Der erste Kühlmittelkreislauf 112 verbindet einen ersten Kühlmittelkühler 120 mit dem Motorblock 128 des Verbrennungsmotors, dem motorfernen zweiten Dosierventil 58 und dem Abgasrückführungskühler 82 in der Niederdruckabgasrückführung 80. Zusätzlich können weitere Komponenten, insbesondere ein Abgasrückführungskühler in der Hochdruckabgasrückführung 90, ein in Figur 2 dargestellter Motorölkühler 124 und/oder ein Getriebeölkühler 126 in den ersten Kühlmittelkreislauf eingebunden sein. Der erste Kühlmittelkreislauf 112 weist mindestens eine erste Kühlmittelpumpe 116, vorzugsweise eine elektronisch regelbare Kühlmittelpumpe, auf, mit welcher das Kühlmittel durch den ersten Kühlmittelkreislauf 112 gefördert wird.

Der zweite Kühlmittelkreislauf 114 verbindet einen zweiten Kühlmittelkühler 122 mit einem Ladeluftkühler 32 des Verbrennungsmotors 10 sowie mit dem motornahen ersten Dosierventil 56 des Reduktionsmitteldosiersystems 108. Zusätzlich können im zweiten Kühlmittelkreislauf 114 weitere Komponenten, insbesondere ein Kühlsystem für den Abgasturbolader 36 oder das Motorsteuergerät 100, eingebunden sein. Der zweite Kühlmittelkreislauf 114 weist eine zweite Kühlmittelpumpe 118, insbesondere eine elektronisch regelbare Kühlmittelpumpe auf, mit welcher das Kühlmittel durch den zweiten Kühlmittelkreislauf 114 gefördert wird. Das Kühlsystem 110 umfasst ferner eine Verbindungsleitung 150, welche den ersten Kühlmittelkreislauf 112 mit dem zweiten Kühlmittelkreislauf 114 verbindet.

In Figur 2 ist ein Verbrennungsmotor 10 mit einem Kühlsystem 110 zur Kühlung des Motorblocks 128 sowie eines Zylinderkopfes 130 des Verbrennungsmotors 10 sowie der Dosierventile 56, 58 des Reduktionsmitteldosiersystems 108 und weiterer Komponenten dargestellt. Das Kühlsystem 110 umfasst einen ersten Kühlmittelkreislauf 112, welcher im Folgenden als Hochtemperaturkühlmittelkreislauf 112 bezeichnet wird. Das Kühlsystem 110 umfasst ferner einen zweiten Kühlmittelkreislauf 114, welcher im Folgenden als Niedertemperaturkühlmittelkreislauf 114 bezeichnet wird. Der Hochtemperaturkühlmittelkreislauf 112 und der Niedertemperaturkühlmittelkreislauf 114 sind über eine Verbindungsleitung 150 miteinander verbunden.

Der Hochtemperaturkühlmittelkreislauf 112 verbindet einen Motorblock 128 sowie einen Zylinderkopf 130 des Verbrennungsmotors 10 mit einem ersten Kühlmittelkühler 120. Ferner sind in den Hochtemperaturkühlmittelkreislauf 112 ein Motorölkühler 124 und ein Getriebeölkühler 126 eingebunden. Die Komponenten des Hochtemperaturkühlmittelkreislaufs 112 sind vorzugsweise in einer Parallelschaltung angeordnet, wobei der Hochtemperaturkühlmittelkreislauf 112 mehrere Schaltventile 140 oder Temperaturregelventile 138 aufweist, um den Kühlmittelstrom durch alle Komponenten des Hochtemperaturkühlmittelkreislaufs 112 zu leiten oder einzelne Komponenten zu überbrücken. Der Hochtemperaturkühlmittelkreislauf 112 weist ferner mehrere Drosseln 134 auf, mit welchen ein Durchfluss durch die entsprechende Kühlmittelleitung 144 des Hochtemperaturkühlmittelkreislaufs 112 begrenzt wird. In dem Hochtemperaturkühlmittelkreislauf 112 ist eine vorzugsweise mechanisch angetriebene und schaltbare Wasserpumpe 132 angeordnet, welche einen Kühlmittelstrom durch den Motorblock 128 und/oder den Zylinderkopf 130 des Verbrennungsmotors 10 steuert. Ferner ist in dem Hochtemperaturkühlmittelkreislauf 112 eine erste Kühlmittelpumpe 116 vorgesehen, mit welcher ein Kühlmittelstrom durch den Hochtemperaturkühlmittelkreislauf 112 geregelt werden kann. In Figur 2 sind mehrere potenzielle Positionen dargestellt, in welchen das motorferne zweite Dosierventil 58 in den Hochtemperaturkühlmittelkreislauf 112 eingebunden werden kann. Ferner kann ein Abgasrückführungskühler 82 der Niederdruckabgasrückführung 80 durch den Hochtemperaturkühlmittelkreislauf 112 gekühlt werden. Der Hochtemperaturkühlmittelkreislauf 112 umfasst zudem ein Beruhigungsvolumen 152 und einen Ausgleichsbehälter 142

In dem Niedertemperaturkühlmittelkreislauf 114 sind eine zweite Kühlmittelpumpe 118, ein Ladeluftkühler 32, ein motornahes erstes Dosierventil 56 sowie ein zweiter Kühlmittelkühler 122 angeordnet. Ferner können durch den Niedertemperaturkühlmittelkreislauf ein Abgasturbolader 36 und ein Motorsteuergerät 100 gekühlt werden. Zur Temperaturregelung in dem Niedertemperaturkühlmittelkreislauf 114 ist ein Temperaturregelventil 138 vorgesehen, mit welchem der zweite Kühlmittelkühler 122 zugeschaltet oder vom Kühlmittelstrom entkoppelt werden kann. Die Komponenten des Niedertemperaturkühlmittelkreislaufs 114 sind durch entsprechende Kühlmittelleitungen 146 miteinander verbunden. Der Ladeluftkühler 32, das motornahe erste Dosierventil 32, der Abgasturbolader 36 sowie das Steuergerät 100 werden durch parallele Kühlpfade des Niedertemperaturkühlmittelkreislaufs 114 gekühlt, wobei der Kühlmittelstrom durch den Niedertemperaturkühlmittelkreislauf 114 durch die zweite Kühlmittelpumpe 118 geregelt wird.

Sowohl der Hochtemperaturkühlmittelkreislauf 112 als auch der Niedertemperaturkühlmittelkreislauf 114 sind durch Rücklaufleitungen 148 mit dem Ausgleichsbehälter 142 verbunden, wobei in den Rücklaufleitungen 148 jeweils ein Rückschlagventil 136 angeordnet ist.

Die Einbindung eines motornahen Dosierventils 56 in den Hochtemperaturkühlmittelkreislauf 112 ist durch die hohen Kühlmitteltemperaturen und die hohe Umgebungstemperatur ungünstig. Diese Umstände können ein Dosierventil sowie das Reduktionsmittel 78 schädigen. Um eine optimale Kühlwirkung für das Reduktionsmitteldosiersystem 108 zu erzielen ist, daher das motornahe erste Dosierventil 56 in den Niedertemperaturkühlmittelkreislauf 114 und das motorferne zweite Dosierventil 58 in den Hochtemperaturkühlmittelkreislauf 112 eingebunden. Somit wird die funktionale Sicherheit des Reduktionsmitteldosiersystems 108 erhöht. Ein kontinuierlicher Kühlmitteldurchfluss durch die beiden Dosierventile 56, 58 ist durch die beiden Kühlmittelpumpen 116, 118 gewährleistet.

### Bezugszeichenliste

- 10: Verbrennungsmotor/ Dieselmotor
- 12: Brennraum
- 14: Kraftstoffinjektor
- 16: Einlass
- 18: Auslass

- 20: Ansaugtrakt
- 22: Luftfilter
- 24: Luftmassenmesser
- 26: Verdichter
- 28: Ansaugkanal

- 30: Drosselklappe
- 32: Ladeluftkühler
- 34: Einmündung
- 36: Abgasturbolader
- 38: Temperatursensor

- 40: Abgasanlage
- 42: Abgaskanal
- 44: Turbine
- 46: Oxidationskatalysator
- 48: erster SCR-Katalysator

- 50: Partikelfilter mit SCR-Beschichtung
- 52: zweiter SCR-Katalysator
- 54: Ammoniak-Sperrkatalysator
- 56: erstes Dosierventil
- 58: zweites Dosierventil
- 60: Abgasklappe
- 62: Abgassensor
- 64: Differenzdrucksensor
- 66: erster Abgasmischer
- 68: zweiter Abgasmischer

- 70: Verzweigung
- 72: erste Reduktionsmittelleitung
- 74: zweite Reduktionsmittelleitung
- 76: Reduktionsmittelbehälter
- 78: Reduktionsmittel

- 80: Niederdruckabgasrückführung
- 82: Abgasrückführungskühler
- 84: Abgasrückführungsventil
- 86: Abgasrückführungsleitung
- 88: NH₃-Sensor

- 90: Hochdruckabgasrückführung
- 92: NH₃-NO_{X}-Kombisensor
- 94: NO_{X}-Speicherkatalysator
- 96: Abgasrückführungsleitung
- 98: Hochdruckabgasrückführungsventil

- 100: Motorsteuergerät
- 102: Recheneinheit
- 104: Speichereinheit
- 106: Programmcode
- 108: Reduktionsmitteldosiersystem

- 110: Kühlsystem
- 112: erster Kühlmittelkreislauf / Hochtemperaturkühlmittelkreislauf
- 114: zweiter Kühlmittelkreislauf / Niedertemperaturkühlmittelkreislauf
- 116: erste Kühlmittelpumpe
- 118: zweite Kühlmittelpumpe
- 120: erster Kühlmittelkühler
- 122: zweiter Kühlmittelkühler
- 124: Motorölkühler
- 126: Getriebeölkühler
- 128: Motorblock

- 130: Zylinderkopf
- 132: Wasserpumpe
- 134: Drossel
- 136: Rückschlagventil
- 138: Temperaturregelventil

- 140: Schaltventil
- 142: Ausgleichsbehälter
- 144: Kühlmittelleitung des ersten Kühlmittelkreislaufs
- 146: Kühlmittelleitung des zweiten Kühlmittelkreislaufs
- 148: Rücklaufleitung

- 150: Verbindungsleitung
- 152: Beruhigungsvolumen

## Patentansprüche

1. Kühlsystem (110) zur Kühlung von Dosierventilen (56, 58) eines Reduktionsmitteldosiersystems (108) zur Eindosierung eines Reduktionsmittels (78) in eine Abgasanlage (40) eines Verbrennungsmotors (10), wobei das Kühlsystem (110) einen ersten Kühlmittelkreislauf (112) umfasst, welcher einen Motorblock (128) des Verbrennungsmotors (10) mit Kühlmittel versorgt, sowie einen zweiten Kühlmittelkreislauf (114), welcher einen Ladeluftkühler (32) des Verbrennungsmotors (10) mit Kühlmittel versorgt, wobei der erste Kühlmittelkreislauf (112) eine erste Kühlmittelpumpe (116, 132) und der zweite Kühlmittelkreislauf (114) eine zweite Kühlmittelpumpe (118) umfasst, **dadurch gekennzeichnet, dass** ein in Strömungsrichtung eines Abgasstroms des Verbrennungsmotors (10) durch eine Abgasanlage (20) des Verbrennungsmotors (10) motornahes erstes Dosierventil (56) mit dem zweiten Kühlmittelkreislauf (114) verbunden ist und ein motorfernes zweites Dosierventil (58) mit dem ersten Kühlmittelkreislauf (112) verbunden ist.

2. Kühlsystem (110) nach Anspruch 1, **dadurch gekennzeichnet, dass** in dem zweiten Kühlmittelkreislauf (114) der Ladeluftkühler (32) und das erste Dosierventil (46) in einer Parallelschaltung zueinander angeordnet sind.

3. Kühlsystem (110) nach Anspruch 2, **dadurch gekennzeichnet, dass** mindestens eine weitere zu kühlende Komponente (36, 100) in einer weiteren Parallelschaltung zu dem Ladeluftkühler (32) und dem ersten Dosierventil (56) angeordnet ist.

4. Kühlsystem (110) nach Anspruch 3, **dadurch gekennzeichnet, dass** die mindestens eine weitere zu kühlende Komponente (36, 100) ein Abgasturbolader (36) und/oder ein Motorsteuergerät (100) ist.

5. Kühlsystem (110) nach einem der Ansprüche 1 bis 4, **dadurch gekennzeichnet, dass** der erste Kühlmittelkreislauf (112) und der zweite Kühlmittelkreislauf (114) über eine Verbindungsleitung (150) miteinander verbunden sind.

6. Kühlsystem (110) nach Anspruch 5, **dadurch gekennzeichnet, dass** der erste Kühlmittelkreislauf (112) über eine erste Rücklaufleitung (148) und der zweite Kühlmittelkreislauf (114) über eine zweite Rücklaufleitung (148) mit einem gemeinsamen Ausgleichsbehälter (142) verbunden sind.

7. Kühlsystem (110) nach einem der Ansprüche 1 bis 6, **dadurch gekennzeichnet, dass** die erste Kühlmittelpumpe (116) und/oder die zweite Kühlmittelpumpe (118) als elektrisch angetriebene Kühlmittelpumpe ausgeführt ist/sind.

8. Kühlsystem (110) nach einem der Ansprüche 1 bis 7, **dadurch gekennzeichnet, dass** ein Fördervolumen der elektrisch angetriebenen Kühlmittelpumpe (116, 118) regelbar, vorzugsweise stufenlos regelbar ist.

9. Verbrennungsmotor (10) mit einem Motorblock (128), wobei in dem Motorblock (128) mindestens ein Brennraum (12) ausgebildet ist, wobei ein Einlass (16) des Verbrennungsmotors (10) mit einem Ansaugtrakt (20) und ein Auslass (18) des Verbrennungsmotors (10) mit einer Abgasanlage (40) verbunden ist, wobei in der Abgasanlage (40) in Strömungsrichtung eines Abgasstroms des Verbrennungsmotors (10) durch die Abgasanlage ein motornaher erster Katalysator (48, 50) zur selektiven, katalytischen Reduktion von Stickoxiden und stromabwärts des ersten Katalysators (48, 50) ein zweiter Katalysator (52) zur selektiven, katalytischen Reduktion von Stickoxiden angeordnet sind, sowie mit einem Reduktionsmitteldosiersystem (108) mit mindestens zwei Dosierventilen (56, 58), wobei das erste Dosierventil (56) stromaufwärts des motornahen ersten Katalysators (48, 50) zur selektiven, katalytischen Reduktion von Stickoxiden und das zweite Dosierventil (58) stromabwärts des motornahen ersten Katalysators (48, 50) zur selektiven, katalytischen Reduktion von Stickoxiden und stromaufwärts des zweiten Katalysators (52) zur selektiven, katalytischen Reduktion von Stickoxiden angeordnet ist, sowie mit einem Kühlsystem (110) nach einem der Ansprüche 1 bis 8.

10. Verbrennungsmotor (10) nach Anspruch 9, **dadurch gekennzeichnet, dass** der motornahe erste Katalysator (48, 50) als Partikelfilter (50) mit einer SCR-Beschichtung ausgeführt ist und der zweite Katalysator (52) als motorferner SCR-Katalysator ausgebildet ist.

## Claims

1. Cooling system (110) for cooling dosing valves (56, 58) of a reducing-agent-dosing system (108) for dosing a reducing agent (78) into an exhaust-gas system (40) of an internal combustion engine (10), wherein the cooling system (110) comprises a first coolant circuit (112), which supplies coolant to an engine block (128) of the internal combustion engine (10), and a second coolant circuit (114), which supplies coolant to a charge-air cooler (32) of the internal combustion engine (10), wherein the first coolant circuit (112) comprises a first coolant pump (116, 132) and the second coolant circuit (114) comprises a second coolant pump (118), **characterized in that** a first dosing valve (56) which, in the flow direction of an exhaust-gas stream of the internal combustion engine (10) through an exhaust-gas system (20) of the internal combustion engine (10), is close to the engine is connected to the second coolant circuit (114) and a second dosing valve (58) which is remote from the engine is connected to the first coolant circuit (112).

2. Cooling system (110) according to Claim 1, **characterized in that** the charge-air cooler (32) and the first dosing valve (46) are arranged in a parallel circuit configuration with respect to one another in the second coolant circuit (114).

3. Cooling system (110) according to Claim 2, **characterized in that** at least one further component (36, 100) to be cooled is arranged in a further parallel circuit configuration with respect to the charge-air cooler (32) and to the first dosing valve (56) .

4. Cooling system (110) according to Claim 3, **characterized in that** the at least one further component (36, 100) to be cooled is an exhaust-gas turbocharger (36) and/or an engine control unit (100) .

5. Cooling system (110) according to one of Claims 1 to 4, **characterized in that** the first coolant circuit (112) and the second coolant circuit (114) are connected to one another via a connecting line (150) .

6. Cooling system (110) according to Claim 5, **characterized in that** the first coolant circuit (112), via a first return line (148), and the second coolant circuit (114), via a second return line (148), are connected to a common expansion tank (142) .

7. Cooling system (110) according to one of Claims 1 to 6, **characterized in that** the first coolant pump (116) and/or the second coolant pump (118) are/is designed as an electrically driven coolant pump.

8. Cooling system (110) according to one of Claims 1 to 7, **characterized in that** a delivery volume of the electrically driven coolant pump (116, 118) is able to be regulated, preferably is able to be regulated in a continuously adjustable manner.

9. Internal combustion engine (10) having an engine block (128), wherein at least one combustion chamber (12) is formed in the engine block (128), wherein an inlet (16) of the internal combustion engine (10) is connected to an intake tract (20) and an outlet (18) of the internal combustion engine (10) is connected to an exhaust-gas system (40), wherein, in the exhaust-gas system (40), in the flow direction of an exhaust-gas stream of the internal combustion engine (10) through the exhaust-gas system, there is arranged a first catalytic converter (48, 50), which is close to the engine and serves for selective catalytic reduction of nitrogen oxides, and, downstream of the first catalytic converter (48, 50), a second catalytic converter (52), which serves for selective catalytic reduction of nitrogen oxides, and having a reducing-agent-dosing system (108) with at least two dosing valves (56, 58), wherein the first dosing valve (56) is arranged upstream of the first catalytic converter (48, 50) close to the engine and serving for selective catalytic reduction of nitrogen oxides and the second dosing valve (58) is arranged downstream of the first catalytic converter (48, 50) close to the engine and serving for selective catalytic reduction of nitrogen oxides and upstream of the second catalytic converter (52) serving for selective catalytic reduction of nitrogen oxides, and having a cooling system (110) according to one of Claims 1 to 8.

10. Internal combustion engine (10) according to Claim 9, **characterized in that** the first catalytic converter (48, 50) close to the engine is designed as a particle filter (50) with an SCR coating, and the second catalytic converter (52) is designed as an SCR catalytic converter which is remote from the engine.

## Revendications

1. Système de refroidissement (110) pour le refroidissement de soupapes de dosage (56, 58) d'un système de dosage d'agent réducteur (108) pour le dosage d'un agent réducteur (78) dans un système d'échappement (40) d'un moteur à combustion interne (10), le système de refroidissement (110) comprenant un premier circuit d'agent de refroidissement (112), qui alimente un bloc moteur (128) du moteur à combustion interne (10) en agent de refroidissement, ainsi qu'un deuxième circuit d'agent de refroidissement (114), qui alimente un refroidisseur d'air de suralimentation (32) du moteur à combustion interne (10) en agent de refroidissement, le premier circuit d'agent de refroidissement (112) comprenant une première pompe à agent de refroidissement (116, 132) et le deuxième circuit d'agent de refroidissement (114) comprenant une deuxième pompe à agent de refroidissement (118), **caractérisé en ce qu'**une première soupape de dosage (56) proche du moteur dans la direction d'écoulement d'un courant de gaz d'échappement du moteur à combustion interne (10) à travers un système d'échappement (20) du moteur à combustion interne (10) est reliée au deuxième circuit d'agent de refroidissement (114) et une deuxième soupape de dosage (58) éloignée du moteur est reliée au premier circuit d'agent de refroidissement (112).

2. Système de refroidissement (110) selon la revendication 1, **caractérisé en ce que** dans le deuxième circuit d'agent de refroidissement (114), le refroidisseur d'air de suralimentation (32) et la première soupape de dosage (46) sont agencés selon un montage en parallèle l'un par rapport à l'autre.

3. Système de refroidissement (110) selon la revendication 2, **caractérisé en ce qu'**au moins un autre composant à refroidir (36, 100) est agencé selon un autre montage en parallèle par rapport au refroidisseur d'air de suralimentation (32) et à la première soupape de dosage (56).

4. Système de refroidissement (110) selon la revendication 3, **caractérisé en ce que** l'au moins un autre composant à refroidir (36, 100) est un turbocompresseur (36) et/ou un appareil de commande de moteur (100).

5. Système de refroidissement (110) selon l'une quelconque des revendications 1 à 4, **caractérisé en ce que** le premier circuit d'agent de refroidissement (112) et le deuxième circuit d'agent de refroidissement (114) sont reliés entre eux par l'intermédiaire d'une conduite de liaison (150).

6. Système de refroidissement (110) selon la revendication 5, **caractérisé en ce que** le premier circuit d'agent de refroidissement (112) est relié par l'intermédiaire d'une première conduite de retour (148) et le deuxième circuit d'agent de refroidissement (114) est relié par l'intermédiaire d'une deuxième conduite de retour (148) à un réservoir d'équilibrage commun (142).

7. Système de refroidissement (110) selon l'une quelconque des revendications 1 à 6, **caractérisé en ce que** la première pompe à agent de refroidissement (116) et/ou la deuxième pompe à agent de refroidissement (118) est/sont conçue(s) sous forme de pompe à agent de refroidissement à entraînement électrique.

8. Système de refroidissement (110) selon l'une quelconque des revendications 1 à 7, **caractérisé en ce qu'**un volume de refoulement de la pompe à agent de refroidissement à entraînement électrique (116, 118) est réglable, de préférence réglable en continu.

9. Moteur à combustion interne (10) avec un bloc moteur (128), au moins une chambre de combustion (12) étant réalisée dans le bloc moteur (128), une entrée (16) du moteur à combustion interne (10) étant reliée à un conduit d'aspiration (20) et une sortie (18) du moteur à combustion interne (10) étant reliée à un système d'échappement (40) ; dans le système d'échappement (40), dans la direction d'écoulement d'un courant de gaz d'échappement du moteur à combustion interne (10) à travers le système d'échappement, un premier catalyseur (48, 50) proche du moteur étant agencé pour la réduction catalytique sélective d'oxydes d'azote et, en aval du premier catalyseur (48, 50), un deuxième catalyseur (52) étant agencé pour la réduction catalytique sélective d'oxydes d'azote, ainsi qu'avec un système de dosage d'agent réducteur (108) avec au moins deux soupapes de dosage (56, 58), la première soupape de dosage (56) étant agencée en amont du premier catalyseur (48, 50) proche du moteur pour la réduction catalytique sélective d'oxydes d'azote, et la deuxième soupape de dosage (58) étant agencée en aval du premier catalyseur (48, 50) proche du moteur pour la réduction catalytique sélective d'oxydes d'azote et en amont du deuxième catalyseur (52) pour la réduction catalytique sélective d'oxydes d'azote, ainsi qu'avec un système de refroidissement (110) selon l'une quelconque des revendications 1 à 8.

10. Moteur à combustion interne (10) selon la revendication 9, **caractérisé en ce que** le premier catalyseur (48, 50) proche du moteur est conçu sous forme de filtre à particules (50) avec un revêtement SCR et le deuxième catalyseur (52) est réalisé sous forme de catalyseur SCR éloigné du moteur.
